# EUROPÄISCHE PATENTSCHRIFT

(11) **EP 1 330 068 B1**
(45) Veröffentlichungstag und Bekanntmachung des Hinweises auf die Patenterteilung: **24.12.2008**
(21) Anmeldenummer: 03000748.8
(22) Anmeldetag: 13.01.2003
(51) Int. Cl.: H04L 9/32

(54) **Verfahren und Datenübertragungssystem für eine bidirektionale Datenübertragung zwischen zwei Einrichtungen**
Method and data transmission system for bidirectional data transmission between two devices
Procédé et système de transmission de données pour une transmission bidirectionelle entre deux dispositifs

(30) Priorität: 21.01.2002 DE 10202098
(43) Veröffentlichungstag der Anmeldung: 23.07.2003
(73) Patentinhaber: Delphi Technologies, Inc., Troy, MI 48007 (US)
(72) Erfinder: Wiethege, Eric, 51472 Bergisch Gladbach (DE); Pessara, Bernd, 51472 Bergisch Gladbach (DE)
(74) Vertreter: Denton, Michael John

(56) Entgegenhaltungen:
- GB-A- 1 568 340
- MENEZES, VANSTONE, OORSCHOT: "Handbook of Applied Cryptography" 1997 , CRC PRESS LLC , USA XP002257510 * Seite 24- Seite 25 * * Seite 405 - Seite 412 *
- BRUCE SCHNEIER: "Applied Cryptograhy second Edition" 1996 , JOHN WILEY & SONS , USA XP002257509 * Seite 101 - Seite 104 * * Seite 109 * * Seite 548 - Seite 549 *

## Beschreibung

Die Erfindung betrifft ein Verfahren sowie ein Datenübertragungssystem für eine bidirektionale Datenübertragung zwischen zwei Einrichtungen, bei denen eine erste der beiden Einrichtungen eine Zufallszahl aussendet und die zweite Einrichtung diese Zufallszahl empfängt und sowohl in der ersten als auch in der zweiten Einrichtung die Zufallszahl entsprechend einer gemeinsamen Verschlüsselungsfunktion unter Berücksichtigung eines gemeinsamen Geheimschlüssels jeweils verschlüsselt wird.

Ein solches Verfahren sowie ein solches Datenübertragungssystem können beispielsweise dort eingesetzt werden, wo es um die Überprüfung geht, ob eine bestimmte Person autorisiert ist, eine Zugangskontrolleinrichtung zu passieren. Dabei kann es sich sowohl um ortsfeste Zugangskontrolleinrichtungen, zu denen nur ein ausgewählter Personenkreis Zutritt hat, als auch um mobile Zugangseinrichtungen, insbesondere an Fahrzeugen wie Kraftfahrzeugen, Schiffen oder Zweirädern, handeln. Durch das Vorsehen von Zugangskontrolleinrichtungen soll z.B. dem Diebstahl des Fahrzeugs entgegengewirkt werden. Ein entsprechendes Verfahren sowie ein entsprechendes Datenübertragungssystem ist beispielsweise aus der DE 195 23 009 C2 bekannt.

Ein Verfahren sowie ein Datenübertragungssystem der eingangs genannten Art sind beispielsweise auch in MENEZES, VANSTONE, OORSCHOT: "Handbook of Applied Cryptography" 1997, CRC PRESS LLC, USA XP002257510 beschrieben.

Aus der GB-A-1 568 340 ergibt sich ein Verfahren zur Bitfehlerquotenmessung in einem Zeitmultiplex-System mittels Vergleichen eines übertragenen ersten Testsignals, insbesondere eines Quasi-Zufallssignals, mit einem örtlich erzeugten zweiten Testsignal und Zählung der den Bitfehlern entsprechenden auftretenden Vergleichsdifferenzen innerhalb eines, einer bestimmten Anzahl übertragener Bits entsprechenden Zeitintervalls. Die auftretenden Vergleichsdifferenzen sind, sofern Sende- und Empfangsseite des betreffenden Bitfehlerquotenmessgeräts sich in Synchronisation befinden, gleich der Anzahl der aufgetretenen Bitfehler. Die gesamte Anzahl der übertragenen Bits liegt dabei durch die Dauer des Mess-Zeitintervalls fest, so dass die Bitfehlerquote leicht ermittelt werden kann.

Es sind insbesondere auch bereits so genannte Chipkartensysteme für einen schlüssellosen Zugang (keyless entry) bekannt, bei denen mittels einer den Schlüssel ersetzenden, der Benutzeridentifikation dienenden Einrichtung (ID = Identification Device) wie beispielsweise einer Chipkarte z.B. die Türen und der Kofferraum des betreffenden Kraftfahrzeugs geöffnet und dessen Motor gestartet werden kann. Dabei werden zwischen wenigstens einem im Kraftfahrzeug integrierten Sender und der ID-Einrichtung Sende- und Antwortsignale gewechselt. Bevor eine jeweilige Funktion ausgeführt werden kann, wird der von der ID übermittelte Identifikationscode geprüft. Bei einem solchen System für einen schlüssellosen Zugang handelt es sich typischerweise um ein bidirektionales HF-Kommunikationssystem.

Problematisch bei solchen Verfahren und Systemen ist unter anderem, dass sicherheitsrelevante Daten über ein unsicheres Medium wie beispielsweise eine HF-Kommunikationsstrecke übertragen werden müssen.

Ziel der Erfindung ist es, ein verbessertes Verfahren sowie ein verbessertes Datenübertragungssystem der eingangs genannten Art zu schaffen, bei denen die Sicherheit weiter erhöht ist.

Erfindungsgemäß wird diese Aufgabe bezüglich des Verfahrens dadurch gelöst, dass sowohl in der ersten als auch in der zweiten Einrichtung auf der Basis des Verschlüsselungsergebnisses für jeden Block der blockweise auszusendenden bzw. zu empfangenden Daten die jeweilige Bitanzahl bestimmt wird, wobei entsprechend dem Verschlüsselungsergebnis bei der blockweisen Datenübertragung zeitweise nur die erste, nur die zweite oder gleichzeitig beide Einrichtungen jeweils einen Block aussenden können.

Dabei kann beim Empfang eines Verschlüsselungsergebnisses in einer jeweiligen Einrichtung außer insbesondere einer Prüfung der Korrektheit der Daten auch geprüft werden, ob alle Daten in der jeweils vorgegebenen Zeit eingegangen sind.

Vorteilhafterweise wird eine Blocklängevariation angewandt.

In bestimmten Fällen ist es zweckmäßig, wenn außer der Bestimmung der jeweiligen Bitanzahl eine weitere Verschlüsselung vorgenommen und zwischen den beiden Einrichtungen übertragen wird. Auch ein solches weiteres Verschlüsselungsergebnis kann grundsätzlich wieder so behandelt werden, wie dies zuvor angegeben wurde.

Gemäß einer bevorzugten praktischen Ausgestaltung des erfindungsgemäßen Verfahrens wird die bidirektionale Datenübertragung zur Prüfung der Nutzungsberechtigung einer Zugangskontrolleinrichtung, insbesondere einer Fahrzeug-Schließeinrichtung, verwendet. Dabei kann die erste Einrichtung insbesondere durch eine zugangsseitige Steuereinrichtung und die zweite Einrichtung insbesondere durch eine benutzerseitige Schlüsseleinrichtung gebildet sein.

Erfindungsgemäß wird die weiter oben angegebene Aufgabe bezüglich des Datenübertragungssystems dadurch gelöst, dass sowohl in der ersten als auch in der zweiten Einrichtung auf der Basis des Verschlüsselungsergebnisses für jeden Block der blockweise auszusendenden bzw. zu empfangenden Daten die jeweilige Bitanzahl bestimmt wird, wobei entsprechend dem Verschlüsselungsergebnis bei der blockweisen Datenübertragung zeitweise nur die erste, nur die zweite oder gleichzeitig beide Einrichtungen jeweils einen Block aussenden können.

Bevorzugte Ausführungsformen des erfindungsgemäßen Datenübertragungssystems sind in den Unteransprüchen angegeben.

Erfindungsgemäß kann also insbesondere ein bidirektionales Kommunikationssystem verwirklicht werden, bei dem für Außenstehende eine Vorhersage der Anzahl von in der einen, der anderen oder in beiden Richtungen gleichzeitig zu sendenden Bits möglich ist, wodurch die Sicherheit entsprechend erhöht wird.

Dabei sollte zweckmäßigerweise in den beiden Einrichtungen der gleiche Verschlüsselungsalgorithmus bzw. die gleiche Verschlüsselungsfunktion und der gleiche Verschlüsselungscode oder Geheimschlüssel eingesetzt werden.

Die Erfindung kann beispielsweise zur Authentifizierung einer Identifikationseinrichtung (z.B. Schlüsseleinrichtung) bei einer elektronisch verriegelbaren Einrichtung (z.B. Verriegelung, Entriegelung oder Start eines Kraftfahrzeugs) angewendet werden.

Zunächst sendet beispielsweise die verriegelte Einrichtung, z.B. ein Kraftfahrzeug einen neu erzeugten Zufallszahlenwert zur Schlüsseleinrichtung.

Basierend auf dem Zufallszahlenwert, dem gemeinsamen Geheimschlüssel und dem gemeinsamen Verschlüsselungsalgorithmus berechnen die Identifikationseinrichtung, z.B. Schlüsseleinrichtung, und die verriegelte Einrichtung, z. B. ein Kraftfahrzeug, jeweils ein Verschlüsselungsergebnis als Funktion der Zufallszahl und des Geheimschlüssels. Das Verschlüsselungsergebnis lässt sich also beispielsweise darstellen als f (Zufallszahl, Geheimschlüssel).

Basierend auf dem Verschlüsselungsergebnis können die beiden Seiten bzw. Einrichtungen jetzt die Anzahl von auszusendenden und zu empfangenden Bits berechnen.

Die Erfindung wird im folgenden anhand von Ausführungsbeispielen unter Bezugnahme auf die Zeichnung näher erläutert; in dieser zeigen:
- Figur 1: eine schematische Darstellung einer blockweisen Datenübertragung zwischen zwei Einrichtungen,
- Figur 2: eine mit der Figur 1 vergleichbare Darstellung, wobei für die Bitanzahlen der verschiedenen Blöcke bestimmte beispielhafte Bereiche angegeben sind, und
- Figur 3: eine mit der Figur 2 vergleichbare Darstellung, wobei für die Bitanzahlen der verschiedenen Blöcke beispielhaft konkrete Werte angegeben sind.

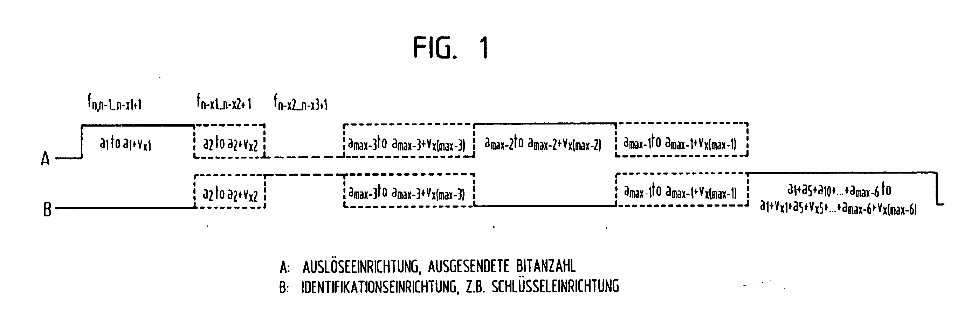

Figur 1 zeigt in schematischer Darstellung ein Ausführungsbeispiel für eine blockweise Datenübertragung zwischen zwei Einrichtungen, bei denen es sich beispielsweise um eine Auslöseeinrichtung und um eine Identifikationseinrichtung wie beispielsweise eine Schlüsseleinrichtung handeln kann.

In der dargestellten Weise lässt sich insbesondere eine bidirektionale Kommunikation verwirklichen, bei der für Außenstehende eine Vorhersage der Anzahl von in der einen, in der anderen oder in beiden Richtungen gleichzeitig zu sendenden Bits nicht möglich ist.

Ein entsprechendes Kommunikationssystem ist beispielsweise dadurch möglich, dass beide Kommunikationspartner bzw. Einrichtungen den gleichen Verschlüsselungsalgorithmus bzw. die gleiche Verschlüsselungsfunktion, im folgenden als "f (...)" bezeichnet, und den gleichen Verschlüsselungscode oder Geheimschlüssel verwenden.

Ein solches Verfahren bzw. ein entsprechendes Datenübertragungssystem kann beispielsweise zur Authentifizierung einer Identifikationseinrichtung wie z.B. einer Schlüsseleinrichtung bei einer elektronisch verriegelbaren Einrichtung, z.B. zur Verriegelung, Entriegelung oder zum Starten eines Fahrzeugs, angewandt werden.

Zunächst muss die verriegelte Einrichtung, z.B. das Kraftfahrzeug, einen neu erzeugten Zufallszahlenwert an die Schlüsseleinrichtung senden.

Basierend auf dem Zufallszahlenwert, dem gemeinsamen Geheimschlüssel und dem gemeinsamen Verschlüsselungsalgorithmus berechnen die Identifikationseinrichtung, z.B. Schlüsseleinrichtung, und die verriegelte Einrichtung, z.B. Kraftfahrzeug, das Verschlüsselungsergebnis, das sich darstellen lässt als f (Zufallszahl, Geheimschlüssel).

Auf der Basis des Verschlüsselungsergebnisses berechnen die beiden Seiten bzw. Einrichtungen die auszusendende und zu empfangende Bitanzahl beispielsweise in der Weise, wie dies in den Figuren 1 bis 3 dargestellt ist.

In der Figur 1 ist am linken Rand zunächst die jeweilige Quelle angegeben, von der die betreffenden ausgesandten Bits stammen. Die Datenübertragung erfolgt blockweise, wobei zeitweise nur die Auslöseeinrichtung, nur die Identifikationseinrichtung, z.B. Schlüsseleinrichtung oder gleichzeitig beide Einrichtungen jeweils einen Block aussenden können. Mit der gestrichelten Darstellung bestimmter Blöcke ist angedeutet, dass zu den betreffenden Zeitpunkten sowohl von der Auslöseeinrichtung als auch von der Identifikationseinrichtung jeweils ein Block ausgesandt werden kann, d.h. die beiden Einrichtungen gleichzeitig jeweils einen Block aussenden können.

Im Diagramm der Figur 1 ist in der ersten Zeile zunächst die sich aus dem Verschlüsselungsergebnis ergebende Bitfolge dargestellt. Für die verschiedenen von der Auslöseeinrichtung bzw. der Identifikationseinrichtung auszusendenden Blöcke sind durch entsprechende Parameter bestimmte Bereiche für die jeweilige Bitanzahl angegeben.

Dabei bedeuten:
- m: Block-Nr.
- aₘ: minimale Bitanzahl des Blockes m
- n: Bitanzahl des Verschlüsselungsergebnisses
- fₙ: Bit n des ersten Verschlüsselungsergebnisses f (Zufallszahl, Geheimschlüssel)
- gₒ: Bit o eines zweiten Verschlüsselungsergebnisses g (Zufallszahl, Geheimschlüssel)
- xm: Bitanzahl, wie sie für die Blocklängenvariation verwendet wird
- vₓₘ: Wert von Bits fₓₘ
- d1: Gesamtanzahl der von der Auslöseeinrichtung ausgesandten Bits

Ausgehend von z.B. 28 Bits Gesamtanzahl d1 können für die Parameter aᵢ beispielsweise die folgenden Werte gewählt werden:
d1 = 28
a₁ = 4
a₂ = 0
a₃ = 3
a₄ = 0
a₅ = 6
a₆ = 0
a₇ = 4
a₈ = 0
a₉ = d1 - (a₁ + a₅) = 28 - (4+6) = 10
a₁₀ = 0
a₁₁ = 0

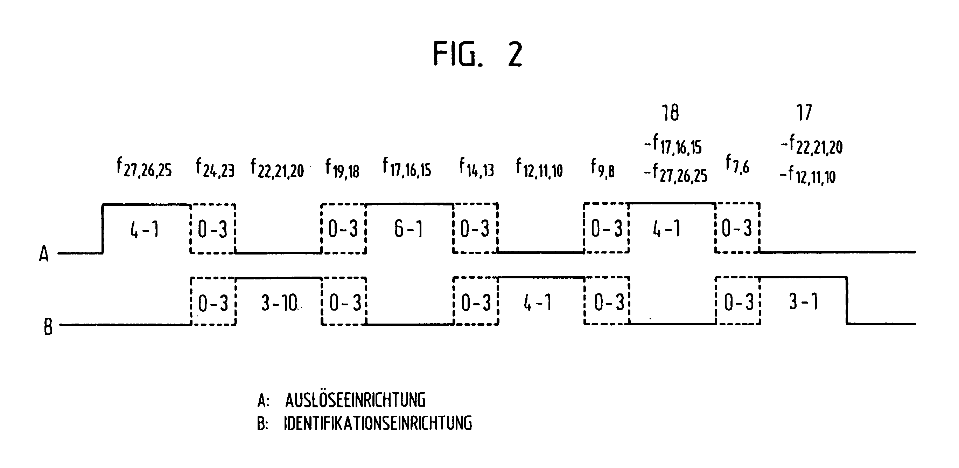

Figur 2 zeigt eine mit der Figur 1 vergleichbare Darstellung, wobei für die Bitanzahlen der verschiedenen Blöcke bestimmte beispielhafte Bereiche angegeben sind, wie sie sich aus den zuvor festgelegten Parametern aᵢ ergeben. Dabei ist in der ersten Zeile des Diagramms der Figur 2 wieder die von der Auslöseeinrichtung ausgesandte Blockfolge und in der unteren Zeile die von der Identifikationseinrichtung ausgesandte Blockfolge dargestellt.

Besitzt das Verschlüsselungsergebnis beispielsweise den hexadezimalen Wert f (RND, SK)₁₆ = CCE9F41, mit RND = Zufallszahl und SK = Geheimschlüssel, so können die beiden Kommunikationsseiten bzw. Einrichtungen die Anzahl von Bits wie folgt berechnen:

| | | |
|---|---|---|
| f (RND, SK)₂ = 110 01 100 11 101 00 111 11 01 000001 | | |
| 4 + f_{27,26,25} | =4 + 6 | = 10 |
| 0 + f_{24,23} | = 0 + 1 | = 1 |
| 3 + f_{22,21,20} | = 3 + 4 | = 7 |
| 0 + f_{19,18} | = 0 + 3 | = 3 |
| 6 + f_{17,16,15} | =6 + 5 | = 11 |
| 0 + f_{14,13} | =0 + 0 | = 0 |
| 4 + f_{12,11,10} | = 4 + 7 | = 11 |
| 0 + f_{9,8} | = 0 + 3 | = 3 |
| 18-f_{17,16,15}-f_{27,26,25} | = 18 - 5 - 6 | = 7 |
| 0 + f_{7,6} | = 0 + 1 | = 1 |
| 17-f_{22,21,20}-f_{12,11,10} | = 17 - 4 - 7 | = 6 |

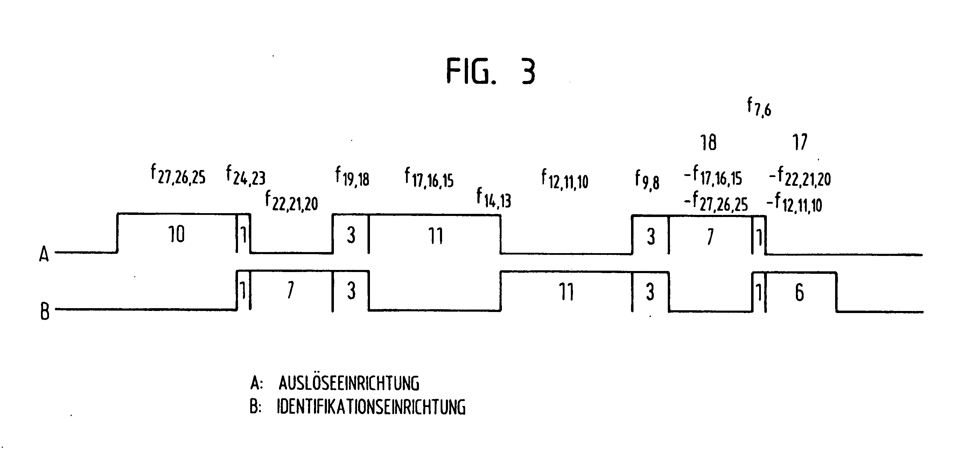

Figur 3 zeigt eine mit der Figur 2 vergleichbare Darstellung, wobei für die Bitanzahlen der verschiedenen Blöcke die sich aus der vorangegangenen Berechnung ergebenden konkreten Werte eingesetzt sind. Dabei ist in der oberen Zeile wieder die von der Auslöseeinrichtung ausgesandte Blockfolge und in der zweiten Zeile die von der Identifikationseinrichtung ausgesandte Blockfolge dargestellt.

Wie anhand dem Diagramm der Figur 3 zu erkennen ist, enthält beim vorliegenden Ausführungsbeispiel beispielsweise der erste von der Auslöseeinrichtung ausgesandte Block zehn Bits und der darauf folgend von dieser Auslöseeinrichtung ausgesandte Block ein Bit. Während des ersten von der Auslöseeinrichtung ausgesandten Blocks darf von der Identifikationseinrichtung kein Block ausgesandt werden. Zu diesem Zeitpunkt sendet also nur die Auslöseeinrichtung entsprechende Daten aus. Im Anschluss daran kann sowohl die Auslöseeinrichtung als auch die Identifikationseinrichtung jeweils einen Block von einem Bit aussenden. Die Auslöseeinrichtung und die Identifikationseinrichtung senden in diesem Zeitabschnitt also gleichzeitig. Im Anschluss daran darf lediglich die Identifikationseinrichtung einen Block aussenden, der beim vorliegenden Ausführungsbeispiel sieben Bits enthält. Im Anschluss daran können wieder beide Einrichtungen einen jeweiligen Block aussenden, wobei im vorliegenden Fall diese Blöcke jeweils drei Bits enthalten. Als nächstes darf lediglich wieder von der Auslöseeinrichtung ein Block ausgesandt werden, der hier, wie dargestellt, elf Bits enthält. Darauf folgend wird lediglich von der Identifikationseinrichtung ein Block ausgesandt, der beim vorliegenden Ausführungsbeispiel elf Bits enthält. Die im Anschluss daran von der Auslöseeinrichtung und der Identifikationseinrichtung gleichzeitig ausgesandten Blöcke enthalten jeweils drei Bits. Im Anschluss daran darf lediglich die Auslöseeinrichtung einen Datenblock aussenden, der hier z.B. sieben Bits enthält. Die daraufhin von den beiden Einrichtungen gleichzeitig ausgesandten Blöcke enthalten jeweils wieder lediglich ein Bit. Der letzte im Diagramm der Figur 3 dargestellte Block wird von der Identifikationseinrichtung ausgesandt und enthält beispielsweise sechs Bit. Während dieser Zeit darf die Auslöseeinrichtung keine Daten aussenden.

Die Informationen darüber, wann beide Seiten bzw. Einrichtungen Daten senden, können von einer der beiden Kommunikationspartner bzw. - einrichtungen nicht empfangen werden, da im Ausführungsbeispiel beispielsweise von einem Senden und Empfangen auf der gleichen Frrequenz ausgegangen wird. Dadurch wird es für Dritte jedoch zusätzlich schwieriger, die korrekte Kommunikation zu identifizieren.

In dem Diagramm der Figur 3 ist genau der Zeitpunkt angegeben, zu dem Informationen durch die eine und/oder andere Einrichtung gesendet werden können. Übertragene Informationen sind in dem Diagramm nicht gezeigt. Es ist beispielsweise möglich, ein zweites Verschlüsselungsergebnis als "Benutzerdaten" während dieser Kommunikation zu übertragen.

Nur dann, wenn sämtliche Daten zur korrekten Zeit empfangen wurden und die Daten korrekt sind, bewirkt die Auslöseeinrichtung eine Auslösung, d.h. z.B. Entriegelung eines Fahrzeuges.

## Patentansprüche

1. Verfahren für eine bidirektionale Datenübertragung zwischen zwei Einrichtungen (A, B), bei dem eine erste der beiden Einrichtungen (A, B) eine Zufallszahl aussendet und die zweite Einrichtung diese Zufallszahl empfängt und sowohl in der ersten als auch in der zweiten Einrichtung die Zufallszahl entsprechend einer gemeinsamen Verschlüsselungsfunktion unter Berücksichtung eines gemeinsamen Geheimschlüssels jeweils verschlüsselt wird,
**dadurch gekennzeichnet,**
**dass** sowohl in der ersten als auch in der zweiten Einrichtung auf der Basis des Verschlüsselungsergebnisses für jeden Block der blockweise auszusendenden bzw. zu empfangenden Daten die jeweilige Bitanzahl bestimmt wird, wobei entsprechend dem Verschlüsselungsergebnis bei der blockweisen Datenübertragung zeitweise nur die erste, nur die zweite oder gleichzeitig beide Einrichtungen (A, B) jeweils einen Block aussenden können.

2. Verfahren nach Anspruch 1,
**dadurch gekennzeichnet,**
**dass** beim Empfang eines Verschlüsselungsergebnisses in einer jeweiligen Einrichtung außer insbesondere einer Prüfung der Korrektheit der Daten auch geprüft wird, ob alle Daten in der jeweils vorgegebenen Zeit eingegangen sind.

3. Verfahren nach Anspruch 1 oder 2,
**dadurch gekennzeichnet,**
**dass** eine Blocklängenvariation angewandt wird.

4. Verfahren nach einem der vorhergehenden Ansprüche,
**dadurch gekennzeichnet,**
**dass** außer den Bestimmungen der jeweiligen Bitanzahl eine weitere Verschlüsselung vorgenommen und zwischen den beiden Einrichtungen übertragen wird.

5. Verfahren nach einem der vorhergehenden Ansprüche,
**dadurch gekennzeichnet,**
**dass** die bidirektionale Datenübertragung zur Prüfung der Nutzungsberechtigung einer Zugangskontrolleinrichtung, insbesondere einer Fahrzeug-Schließeinrichtung, verwendet wird.

6. Verfahren nach Anspruch 5,
**dadurch gekennzeichnet,**
**dass** die erste Einrichtung durch eine zugangsseitige Steuereinrichtung und die zweite Einrichtung durch eine benutzerseitige Schlüsseleinrichtung gebildet wird.

7. Datenübertragungssystem mit zwei Einrichtungen (A, B) und einer bidirektionalen Datenübertragung zwischen den Einrichtungen (A, B), bei dem eine erste der beiden Einrichtungen (A, B) eine Zufallszahl aussendet und die zweite Einrichtung diese Zufallszahl empfängt und sowohl in der ersten als auch in der zweiten Einrichtung die Zufallszahl entsprechend einer gemeinsamen Verschlüsselungsfunktion unter Berücksichtung eines gemeinsamen Geheimschlüssels jeweils verschlüsselt wird,
**dadurch gekennzeichnet,**
**dass** sowohl in der ersten als auch in der zweiten Einrichtung auf der Basis des Verschlüsselungsergebnisses für jeden Block der blockweise auszusendenden bzw. zu empfangenden Daten die jeweilige Bitanzahl bestimmt wird, wobei entsprechend dem Verschlüsselungsergebnis bei der blockweisen Datenübertragung zeitweise nur die erste, nur die zweite oder gleichzeitig beide Einrichtungen (A, B) jeweils einen Block aussenden können.

8. Datenübertragungssystem nach Anspruch 7,
**dadurch gekennzeichnet,**
**dass** beim Empfang eines Verschlüsselungsergebnisses in einer jeweiligen Einrichtung außer insbesondere einer Prüfung der Korrektheit der Daten auch eine Prüfung dahingehend erfolgt, ob alle Daten in der jeweils vorgegebenen Zeit eingegangen sind.

9. Datenübertragungssystem nach Anspruch 7 oder 8,
**dadurch gekennzeichnet,**
**dass** eine Blocklängenvariation vorgesehen ist.

10. Datenübertragungssystem nach einem der vorhergehenden Ansprüche,
**dadurch gekennzeichnet,**
**dass** außer der jeweiligen Bitanzahl zumindest ein weiteres Verschlüsselungsergebnis zwischen den beiden Einrichtungen übertragbar ist.

11. Datenübertragungssystem nach einem der vorhergehenden Ansprüche,
**dadurch gekennzeichnet,**
**dass** es zur Prüfung der Nutzungsberechtigung einer Zugangskontrolleinrichtung, insbesondere einer Fahrzeug-Schließeinrichtung, vorgesehen ist.

12. Datenübertragungssystem nach Anspruch 11,
**dadurch gekennzeichnet,**
**dass** die erste Einrichtung durch eine zugangsseitige Steuereinrichtung und die zweite Einrichtung durch eine benutzerseitige Schlüsseleinrichtung gebildet ist.

## Claims

1. Process for bidirectional data transmission between two devices (A, B), in which a first of the two devices (A, B) emits a random number and the second device receives this random number and both in the first and in the second device, the random number is encoded in each case according to a common encoding function taking into account a common secret key, **characterised in that** both in the first and in the second device, the particular bit number is determined on the basis of the encoding result for each block of data to be emitted or to be received in blocks, wherein according to the encoding result for block-wise data transmission, at times only the first, only the second or simultaneously both devices (A, B) may emit in each case one block.

2. Process according to claim 1, **characterised in that** on receiving an encoding result in a particular device, apart from in particular a check for correctness of the data, a check is also made whether all data are entered in the preset time in each case.

3. Process according to claim 1 or 2, **characterised in that** a block-length variation is used.

4. Process according to one of the preceding claims, **characterised in that** apart from the determinations of the particular bit number, further encoding is carried out and is transmitted between the two devices.

5. Process according to one of the preceding claims, **characterised in that** bidirectional data transmission is used to check the use authorisation of an access-control device, in particular of a vehicle closing device.

6. Process according to claim 5, **characterised in that** the first device is formed by an access-side control device and the second device is formed by a user-side key device.

7. Data-transmission system having two devices (A, B) and bidirectional data transmission between the devices (A, B), in which a first of the two devices (A, B) emits a random number and the second device receives this random number and both in the first and in the second device, the random number is encoded in each case according to a common encoding function taking into account a common secret key, **characterised in that** both in the first and in the second device, the particular bit number is determined on the basis of the encoding result for each block of data to be emitted or to be received in blocks, wherein according to the encoding result for block-wise data transmission, at times only the first, only the second or simultaneously both devices (A, B) may emit in each case one block.

8. Data-transmission system according to claim 7, **characterised in that** on receiving an encoding result in a particular device, apart from in particular a check for correctness of the data, a check also takes place to the effect whether all data are entered in the preset time in each case.

9. Data-transmission system according to claim 7 or 8, **characterised in that** a block-length variation is provided.

10. Data-transmission system according to one of the preceding claims, **characterised in that** apart from the particular bit number, at least one further encoding result can be transmitted between the two devices.

11. Data-transmission system according to one of the preceding claims, **characterised in that** it is provided to check the use authorisation of an access-control device, in particular of a vehicle closing device.

12. Data-transmission system according to claim 11, **characterised in that** the first device is formed by an access-side control device and the second device is formed by a user-side key device.

## Revendications

1. Procédé pour une transmission de données bidirectionnelle entre deux dispositifs (A, B), dans lequel un premier des deux dispositifs (A, B) émet un nombre aléatoire et le deuxième dispositif reçoit ce nombre aléatoire, et tant dans le premier dispositif que dans le deuxième dispositif, le nombre aléatoire respectif est codé selon une fonction de codage commune en tenant compte d'un code secret commun,
**caractérisé en ce que**
tant dans le premier dispositif que dans le deuxième dispositif, le nombre de bits respectif est déterminé sur la base du résultat de codage pour chaque bloc des données à émettre et à recevoir par bloc, respectivement, et selon le résultat de codage lors de la transmission de données par bloc, temporairement seulement le premier dispositif, seulement le deuxième dispositif ou simultanément les deux dispositifs (A, B) peuvent émettre chacun un bloc.

2. Procédé selon la revendication 1,
**caractérisé en ce que**
à la réception d'un résultat de codage dans un dispositif respectif, on procède également, outre en particulier à une vérification de l'exactitude des données, à une vérification quant à savoir si toutes les données sont arrivées dans le temps respectivement prédéterminé.

3. Procédé selon la revendication 1 ou 2,
**caractérisé en ce que**
on applique une variation de longueur de bloc.

4. Procédé selon l'une quelconque des revendications précédentes,
**caractérisé en ce que**
outre les déterminations du nombre de bits respectif, on effectue un autre codage et on le transmet entre les deux dispositifs.

5. Procédé selon l'une quelconque des revendications précédentes,
**caractérisé en ce que**
la transmission de données bidirectionnelle est utilisée pour vérifier l'autorisation d'utilisation d'un dispositif de contrôle d'accès, en particulier d'un dispositif de fermeture de véhicule.

6. Procédé selon la revendication 5,
**caractérisé en ce que**
le premier dispositif est formé par un dispositif de commande côté accès, et le deuxième dispositif est formé par un dispositif à clé côté utilisateur.

7. Système de transmission de données comportant deux dispositifs (A, B) et une transmission de données bidirectionnelle entre les dispositifs (A, B), dans lequel un premier des deux dispositifs (A, B) émet un nombre aléatoire et le deuxième dispositif reçoit ce nombre aléatoire et tant dans le premier dispositif que dans le deuxième dispositif, le nombre aléatoire est respectivement codé selon une fonction de codage commune en tenant compte d'un code secret commun,
**caractérisé en ce que**
tant dans le premier dispositif que dans le deuxième dispositif, le nombre de bits respectif est déterminé sur la base du résultat de codage pour chaque bloc des données à émettre et à recevoir par bloc, respectivement, et selon le résultat de codage lors de la transmission de données par bloc, temporairement seulement le premier dispositif, seulement le deuxième dispositif ou simultanément les deux dispositifs (A, B) peuvent émettre chacun un bloc.

8. Système de transmission de données selon la revendication 7,
**caractérisé en ce que**
à la réception d'un résultat de codage dans un dispositif respectif, il est prévu également, outre en particulier une vérification de l'exactitude des données, une vérification quant à savoir si toutes les données sont arrivées dans le temps respectivement prédéterminé.

9. Système de transmission de données selon la revendication 7 ou 8,
**caractérisé en ce que**
il est prévu une variation de longueur de bloc.

10. Système de transmission de données selon l'une quelconque des revendications précédentes,
**caractérisé en ce que**
outre le nombre de bits respectif, au moins un autre résultat de codage peut être transmis entre les deux dispositifs.

11. Système de transmission de données selon l'une quelconque des revendications précédentes,
**caractérisé en ce que**
il est prévu pour vérifier l'autorisation d'utilisation d'un dispositif de contrôle d'accès, en particulier d'un dispositif de fermeture de véhicule.

12. Système de transmission de données selon la revendication 11,
**caractérisé en ce que**
le premier dispositif est formé par un dispositif de commande côté accès et le deuxième dispositif est formé par un dispositif à clé côté utilisateur.
